(19) Europäisches Patentamt
European Patent Office
Office européen des brevets

(11) **EP 2 871 500 A1**

(12) **EUROPEAN PATENT APPLICATION**

(43) Date of publication:
**13.05.2015 Bulletin 2015/20**

(51) Int Cl.:
*G02B 5/00* *(2006.01)*          *G02B 5/20* *(2006.01)*
*G02B 5/22* *(2006.01)*          *G03B 11/00* *(2006.01)*
*G03B 21/13* *(2006.01)*        *H04N 9/31* *(2006.01)*

(21) Application number: **13192199.1**

(22) Date of filing: **08.11.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **BARCO, NAAMLOZE VENNOOTSCHAP (N.V)**
**8500 Kortrijk (BE)**

(72) Inventors:
• **Vermeirsch, Koenraad**
  **8510 Bellegem (BE)**
• **Gerets, Peter**
  **8800 Roeselare (BE)**
• **Van den Bossche, Bart**
  **8520 Kuurne (BE)**

(74) Representative: **IPLodge bvba**
**Technologielaan 9**
**3001 Heverlee (BE)**

(54) **Optical filter and method for preparing same**

(57)      There is provided an optical filter having a planar body, comprising a first and a second filter material having the same refractive index, the filter materials being in contact along an interface surface, wherein a cross-section of said interface surface comprises a curved line. There is also provided a method comprising: combining a first planar surface and a moulding element to form a first moulding cavity, delimited on one side by said first planar surface and along an edge by a surface of the moulding element; inserting a first material in said cavity; allowing said first material to solidify; removing the moulding element to produce a second moulding cavity, delimited on one side by said first planar surface and along an edge by said solidified material; and inserting a second material in the cavity; wherein a cross-section of said moulding surface comprises a curved line.

Figure 6

Figure 7

EP 2 871 500 A1

## Description

Field of the invention

The present invention concerns an optical filter, in particular a gradient optical filter, and a method for preparing same.

Background

Multichannel projector displays are display systems that make use of at least two projectors to form an image. It is common to let the images partly overlap and correct the brightness so that one seamless image is eventually displayed. The correction can be implemented with optical filters that have an optical density gradient, for example so-called neutral density filters. For some applications it could be advantageous if the filter has continuous transitions between the gradient levels in order to not give rise to diffraction or scattering or other artefacts that could decrease contrast ratio or image quality. It could further be desirable to control the colour tone or to provide a colour neutral filter. It is beneficial if an arbitrary transmission profile could be obtained and that the filter is easy to manufacture.

US6078442 describes a filter comprising a multiple of light absorbing layers of different diameter so that the centre of the filter will have higher absorption than the periphery. However, the filter is limited to radial symmetry and does not provide the above mentioned arbitrary transmission profile. The filter is made by spin coating which is a method that is not suitable for depositing a large number of layers, and does not enable a smooth arbitrary transmission profile with reasonable effort and cost. Thus, US6078442 is not providing a filter with the desired properties.

Summary of the invention

It is a goal of the present invention to provide a gradient density filter made of bulk material and manufactured with a casting process. By varying the thickness of the filter material, a gradation in the transmission can be obtained. This is based on Lambert-Beer's law which states that the transmission depends on the thickness and the extinction coefficient (or the imaginary part of the refractive index) of the material.

According to an aspect of the present invention, there is provided an optical filter having a substantially planar main body, the optical filter comprising a first filter material and a second filter material present in respective regions of said main body, the first filter material and the second filter material having substantially the same real part of their refractive index, wherein the first filter material and the second material are in mutual contact along an interface surface, and wherein a cross-section of said interface surface along a plane perpendicular to said main body comprises a curved line.

The term "substantially planar" refers to a body whose thickness is much smaller than its remaining dimensions.

Unless explicitly indicated otherwise, the "refractive index" referred to herein is only the real part of the complex refractive index, i.e. the actual refractive index without regard to the attenuation of the material. Where it is stated that the real part of the refractive indices of the respective filter materials is substantially the same, it is meant that these indices are the same or very close to each other. In an embodiment, the difference between the refractive index of the first filter material and the refractive index of the second filter material is less than 0.002.

It will be understood that the first filter material and the second filter material may have different light attenuation properties, in view of the desired filtering characteristics of the optical filter.

In this way, one of the materials may provide a filtering effect while the other material may provide a flat exit surface to make sure the light does not get refracted when leaving the filter.

Preferably the filter materials are made homogeneous for the intended radiation in order to avoid that internal structure alters the radiation, for example by scattering or diffraction.

The casting could be performed by using a mould. The mould could be a solid structure used to create a cavity in the first material so that another material can be added in a second step. Alternatively it can be a hollow structure in which the first material is inserted, and a second material can then be added around the first material.

Such a mould could be manufactured by a process based on for example extrusion, sintering or lamination or by any other suitable method that can provide an arbitrary shaped structure. To further increase the ratio between the highest and lowest transmission level, a filter material with high absorptance can be used. In this way the highest absorption level is increased while the lowest absorption level can remain zero by letting the filtering material thin out completely and leave an area with no filtering material.

The described brightness correction filter is not limited to be used for multichannel projection display systems, but could also be used for example as backlight corrector for back-lit displays or any application where a gradient filter is desired.

In an embodiment of the optical filter according to the present invention, the interface surface comprises a general curved surface. A general curved surface describes a transmission profile that is arbitrary.

In an embodiment of the optical filter according to the present invention, the curved line is described by $y = a \ln(bx)$, where $x$ and $y$ are coordinates in said plane, the $x$-axis being parallel to said main body and the $y$-axis being perpendicular to said main body, and a and b are scaling constants. As will described in more detail below, a logarithmic interface profile will advantageously lead to a linear spatial variation of the light transmission. Linear gradients can for example be used to correct the brightness level of the participating images in a blend zone.

In an embodiment of the optical filter according to the present invention the material thicknesses are chosen to provide a pre-defined filter transmission. A predefined transmission can be obtained by varying the thickness of the filter material, for example according to Lambert-Beer's law.

In an embodiment of the optical filter according to the present invention, at least one of the materials is perceived homogeneous for the intended radiation. By having a homogeneous material with no internal structure or pattern, diffraction and/or scattering can be reduced or avoided.

In an embodiment of the optical filter according to the present invention, there are means added to at least one of the materials for increasing the absorption coefficient. Such means could for example be carbon black. Carbon black has a high extinction (or absorption) coefficient while the change in the (real) refractive index is negligible. This is beneficial to avoid refraction in the interface between the two materials. Another advantage is that by using carbon black as absorption modulator the implementation is much more durable in a high lumens illumination environment compared to conventional photographic emulsions, pigments and dyes.

In an embodiment of the optical filter according to the present invention, at least one of the materials comprises a resin, e.g. rubber silicone. The rubber part promotes the silicone to stay non-solidified on the surface.

In an embodiment, the optical filter according to the present invention further comprises a first transmitting sheet covering a first side of said main body. In an embodiment, the optical filter according to the present invention further comprises a second transmitting sheet covering a second side of said main body. The terms "first side" and "second side" refer to the major surfaces of the planar main body. The first transmitting sheet and/or the second transmitting sheet may be glass plates or transparent polymers. Thus, depending on the desired optical and mechanical properties, the optical filter according to the present invention may consist of the bare filter materials, a combination of filter materials and a transmitting backing, or a sandwich of filter materials between two transmitting sheets.

According to another aspect of the invention there is provided a method for preparing an optical filter, the method comprising: combining a first planar surface and a moulding element to form a first moulding cavity, said first moulding cavity being delimited on one side by a first part of said first planar surface and along an edge by a moulding surface of the moulding element; inserting a first material in said first moulding cavity in liquid state; allowing the bulk of said first material to solidify; removing the moulding element so as to produce a second moulding cavity in the space previously occupied by the moulding element, said second moulding cavity being delimited on one side by a second part of said first planar surface and along an edge by said solidified first material; and inserting a second material in the second moulding cavity in liquid state; wherein the first material and the second material have substantially the same real part of their refractive index, and wherein a cross-section of said moulding surface along a plane perpendicular to said first planar surface comprises a curved line.

In an embodiment of the method according to the present invention, the outer boundaries of said first material are left partly non-solidified during the removing of the moulding element.

In an embodiment of the method according to the present invention, the moulding element is made of an elastomer or a rubber.

In an embodiment of the method according to the present invention, the first planar surface is a first transmitting sheet, which becomes part of the optical filter.

In an embodiment, the method according to the present invention further comprises placing a second transmitting sheet on top of the first material and the second material, parallel to the first planar surface, said second transmitting sheet becoming part of the optical filter.

In a particular embodiment, the first transmitting sheet and/or the second transmitting sheet are glass plates or transparent polymers.

After placing the top sheet, the bulk of the second liquid material is allowed to solidify. Preferably, there is no diffusion between the inserted materials and the mould. The transmitting sheets can be made of regular glass or transparent polymers. Mixing or diffusion of the materials at the interface should be limited. The interface should have a correct thickness of the filter materials and be substantially free of inclusions of air and impurities to get the predetermined transmission. To avoid entrapping air at the mould/material interface during the moulding process, the moulding surfaces, including the planar surface and the optional second transmitting sheet, must be sufficiently smooth. The mould may be made of an elastic material, in particular a rubber-like material or an elastomer.

In an embodiment of the method according to the invention the outer boundaries of the materials are left partly non-solidified. In this way it is possible to remove the mould during the manufacturing without harming the mould or the filter materials. Glass plates can easily be removed since the selected silicone materials that are poured in the moulds have low adhesion to glass.

At a final stage of the method according to the present invention, the filter materials may be left to solidify completely, so as to obtain a solid optical filter as an end product.

Brief description of the figures

Embodiments of the present invention will now be described in detail with reference to the accompanying drawings, in which:

Figure 1 is an illustration of a display system;

Figure 2 is an illustration of a display system;

Figure 3 is an illustration of a display system with blended images;

Figure 4 provides examples of dither patterns;

Figure 5 represents the transmission curve of a material slab according to an embodiment of the present invention;

Figure 6 is an illustration of a projector with two types of filters according to an embodiment of the present invention;

Figure 7 is an illustration of a filter according to an embodiment of the present invention;

Figure 8 is an illustration of a filter according to an embodiment of the present invention;

Figure 9 represents a process scheme according to an embodiment of the present invention;

Figure 10 illustrates steps of an embodiment of the method according to the present invention; and

Figure 11 illustrates steps of another embodiment of the method according to the present invention.

Detailed description

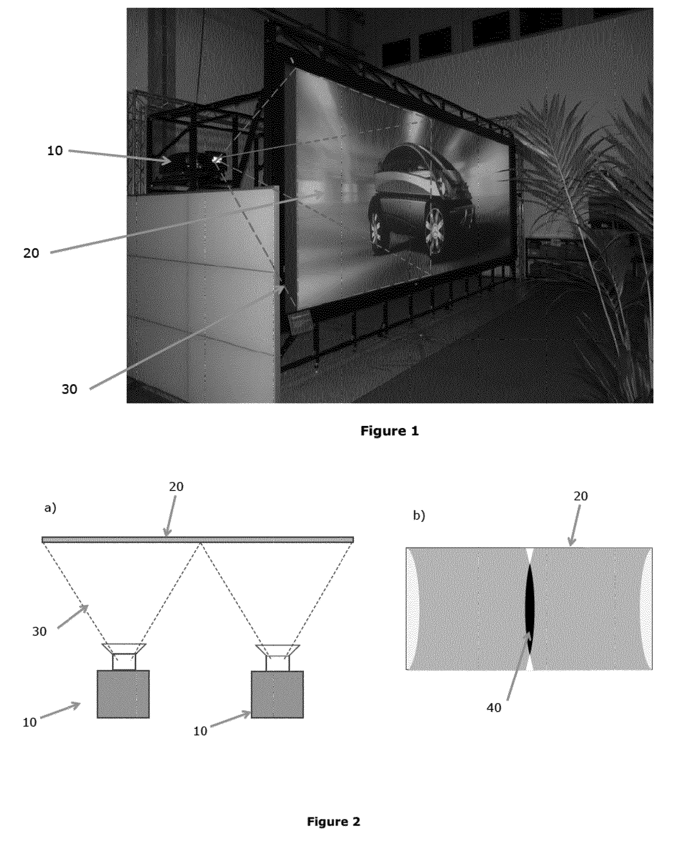

The drawings are schematic illustrations and non-limiting and should not be interpreted to represent an exact scale of the physical objects. Cross-sections of the three-dimensional filter have been used to facilitate the illustration, but this two-dimensional representation should not be seen as a limitation for the filter. The interface of the filter can be non-linear or irregular in all directions. The present invention is not limited to the disclosed embodiments. In the whole description, the same drawing numerals are used for the same elements of the present invention throughout the text. It should be understood that the term "comprising" used in the claims should not be interpreted as being restricted to the means listed thereafter, but should be interpreted as specifying the presence of the stated features and does not preclude the presence or additions of one or more features.
Multichannel projector displays are display systems that make use of at least two projectors to form an image. Figure 1 shows an example of a multichannel projection display system where the dashed lines represent the beam **30** from one projector **10,** displayed onto the screen **20.**
Figure 2 illustrates how two projectors **10** are aligned so that their images are stitched next to each other, in a) a top view and in b) a front view. Misalignments and lens errors may lead to a dark or bright seam **40** between the two images. It is therefore common to let the images partially overlap. In the overlap zone there will be contribution from more than one projector and the brightness will be too high. The erroneous brightness can be controlled in various ways; in principle this is done electronically or physically, the latter is preferred to maintain high contrast. An optical filter with a multiple of grey scales will provide a transmission gradient.

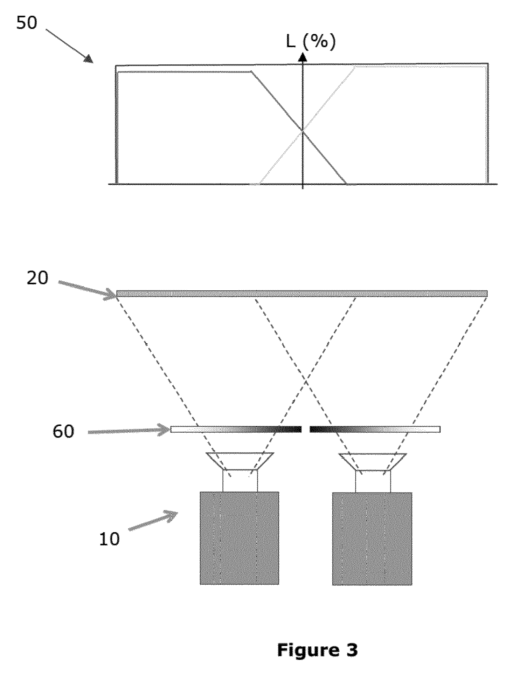

Figure 3 shows a system using gradient filters **60** to achieve a flat brightness distribution **50.** The smoothness of the filter transmission characteristic is determined by the number of grey scales. Most manufacturing techniques for making a customized grey scale filter are digital where the grey scales are achieved with dither patterns where a denser pattern will provide a darker grey level.

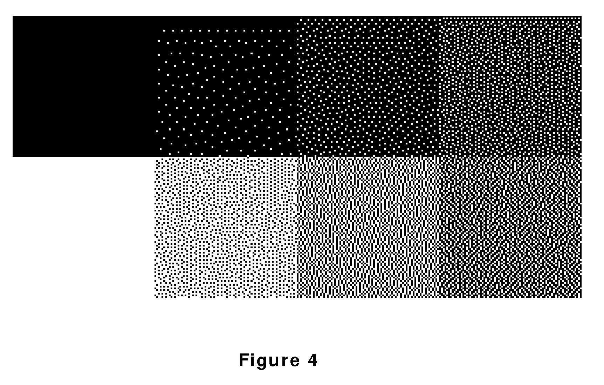

Figure 4 gives some examples of dithering patterns with different density. However, the dither pattern can give rise to artefacts such as diffraction, scattering or reproduction of the dither pattern in the image. The contone- and halftone techniques in laser- and ink jet printers use dither patterns. An optical filter with a continuous tone of analogue or true grey scales is free from internal structure in order to avoid the above mentioned artefacts. The continuous tone technique refers to prints that are made of continuous transitions of tone and colour, rather than being composed of individual dots ("Photo Finish: the digital photographer's guide to printing, showing, and Selling Images", Sybex, by J.Canfield, Tim Grey). There are several techniques to obtain such a filter. The dye sublimation technique is commonly used in photography. Dyes on a carrier are sublimated and migrate into a substrate. Disadvantages of this technique are limitations in maximum optical density (which in turn limits the contrast ratio) and a short life time. Additionally it's not straightforward to print directly on glass. Another method is high energy beam sensitive or HEBS™ filters. This technique is used in photolithographic applications among others. However, the grey tones are not colour neutral, and the electron beam writing process time sequential and not efficient for large areas. Further, the grey level patterns are written according to an analytical equation, which imposes limitations on blend filter designs.
The described brightness correction filter is not limited to be used for multi-display projection systems, but could also be used e.g. as backlight corrector for displays implemented with such lightning technology.
According to Lambert-Beer's law the transmission T of an absorptive neutral density layer can be expressed as

$$T = (1-R)^2 \exp(-k*d) \qquad (1)$$

$$\ln(T/(1-R)^2) = -k*d$$

$$d = -\ln(T/(1-R)^2)/k$$

Where R is the surface reflectance, k is the absorption coefficient [1/m] and d is the thickness [m] of the absorptive medium. This implies that for a medium with given absorption k and given reflection R, one can calculate the thickness d of the tinted material that is required to achieve a certain transmission. The surface reflectance R can be measured or calculated, hence we can derive a function for the thickness d that would give us a linear transmission gradient. It turns out that d exhibits a logarithmic behaviour. Thus, if the extinction coefficient of the filter material is known and a target transmission for providing a seamless image is known, the thickness profile of the filter material can be calculated. The transmission of each filter can be linear in the overlap zone, adding up to a flat brightness level as shown in Figure 3.

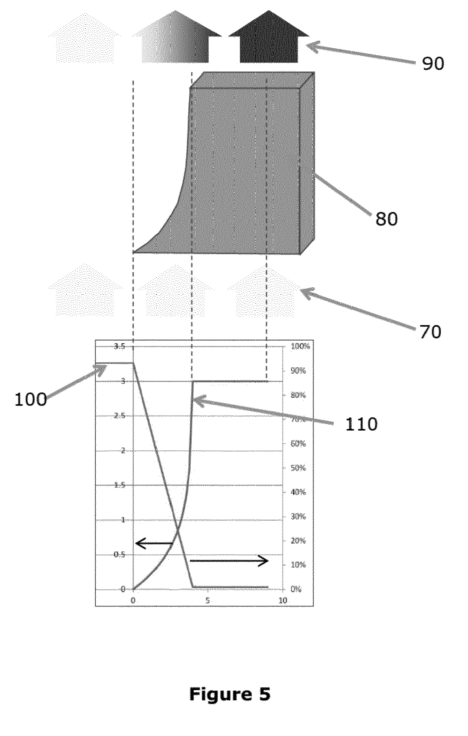

Figure 5 shows the incident light **70,** a tinted wedge shaped medium **80,** the transmitted light **90** and below the graph illustrating the corresponding thickness (in mm) **100** and the thickness profile **110** of the transmitting medium. The thickness profile **110** is given a logarithmic shape, creating a gradient in material thickness perpendicular to the axis of the light propagation. The incident light **70** will get differently absorbed so that the transmitted light **90** will have a linear gradient **100.** Since an optical wedge contains optical power it gives rise to wave front distortion.

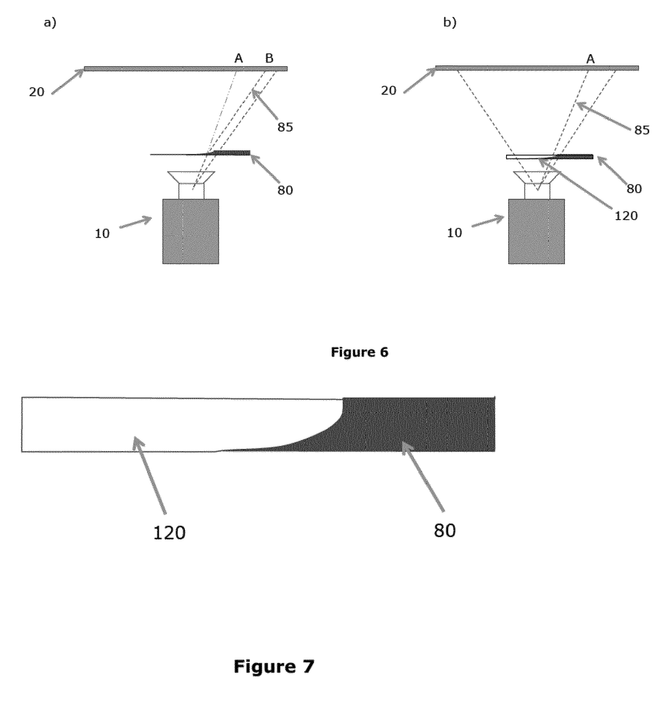

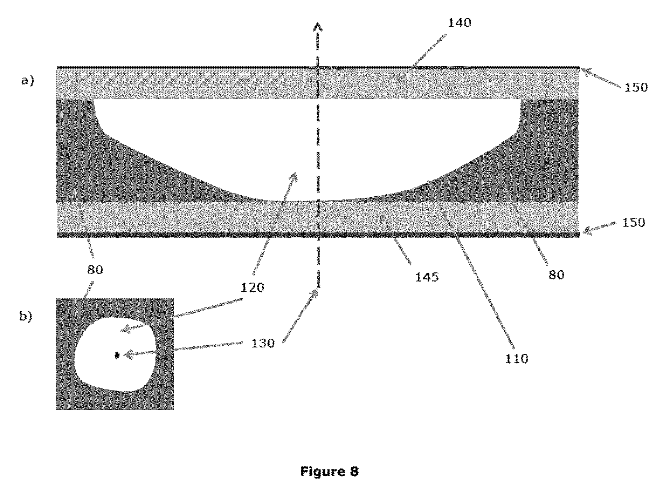

Figure 6 a) shows how the light **85** transmitted from the logarithmically shaped edge of the filter is refracted from point A to point B. Thus, if the tinted material is non-linearly shaped it is advantageous to put a non-tinted material with the real part of the refractive index very close to that of the tinted material. The inventor has found that it is preferable if the difference in the real part of the refractive index of the two materials is smaller than 0.002 to avoid image artefacts. Figure 8 b) shows how such a compound filter consisting of a tinted wedge shaped medium **80** and non-tinted material **120** forms a continuous gradient filter which refracts the light homogeneously across the filter.

Thus, with knowledge of the brightness profile of the images of a multiple projector system, the transmission profile of the filters can be decided. Knowing the transmission and the absorption coefficient of the filter material, the thickness of the filtering material can be calculated. It is also possible to make a custom made filter for each overlap zone of a multichannel display system. For a certain absorption coefficient of the filter material and for a desired output transmission, the material thickness for each pixel position is calculated using Lambert-Beer's law (1).

Figure 7 shows an example of a composed filter where a non-tinted material **120** with the same (real) refractive index as the tinted wedge shaped medium **80** has been added in order to avoid refractive power of the filtering material. The interface between the two materials **80** and **120** has a logarithmic profile so that the transmission will be linear. Lambert-Beer's law (1) gives that the transmission is proportional to exp(-kd), d being the distance the light has travelled and k being the extinction coefficient of the medium the light travels through. More generally, the interface profile, which corresponds to the cross-section of the interface surface between the two different filter materials in a plane perpendicular to the main body of the filter, may be described by any desired curve. In particular, the interface surface may be any general curved surface.

In principle the transmission could be described by any function or shape. The linear case is an example of an embodiment that can be used to create a gradient filter for multichannel display systems. If the transmission is known, the thickness will be proportional to the logarithm of the transmission and to the extinction coefficient of the medium. In this way it is possible to obtain a target transmission with help of varying the thickness of the medium. It is important that there is a smooth and distinct interface between the two materials. The second material **120** is a means for avoiding refraction between the wedge shaped tinted medium **80** and the surrounding medium (e.g. air) due to the difference in (real) refractive index between them. The transmission modulation is provided by the thickness of the wedge shaped tinted medium **80.** The extinction coefficient of a material determines the amount of attenuation of light travelling through it. The interface should not contain any air inclusions or impurities to avoid scattering and other image artefacts.

The invention is however not limited to transmission control of visible light but can be extended to any material property and wavelength range of the involved radiation. Hereafter is meant with "filter material" the material that is performing some type of filtration of the radiation. A "clear material" is a material with no such filtration property but with the (real) refractive index substantially identical or very close to the filter material. An example of the two could be a tinted and a non-tinted version of the same material.

Figure 8 illustrates an embodiment of the present invention where a) is a side view with the light propagation axis **130** and b) is a top view where the light propagation axis **130** is perpendicular to the plane of the paper. Glass slabs **140** and **145,** referred to as "a" and "b" respectively, have anti-reflection layers **150** and encompass the filter material **80** and the clear material **120.** The interface **110** is non-linear in all three dimensions.

An additive can be mixed into the material in order to further increase the maximum absorption level. This will not affect the lowest absorption level possible which can still be implemented with letting the wedge thin out to zero thickness. It is also possible to leave a certain thickness of the filtering material for obtaining the minimum absorption level. The non-flat shape of the material will refract the light, so a non-tinted version of the same material, or another material with substantially the same (real) refractive index, is added on top of the tinted profile. The combined piece will have flat parallel surfaces and will not refract the light. If the material is homogeneously tinted, there will be no internal structure that could give rise to diffraction or scattering.

In the present embodiments, a linear transmission gradient is considered for simplicity, but theoretically it is possible to realize arbitrary transmission gradients by calculating or measuring the system output brightness. This means that the filter can be tailored according to the brightness profile of the system it will be used in.

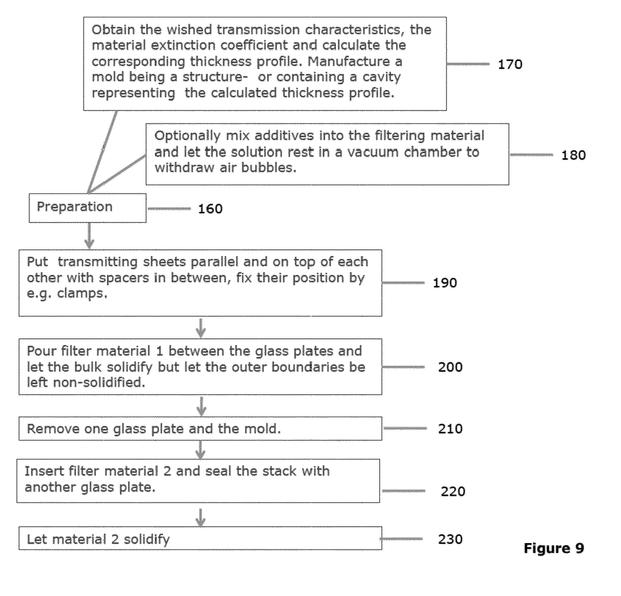

Figure 9 illustrates a manufacturing method of an embodiment of the invention. The process comprises the below described steps.

In **160** contains preparation steps **170** and **180** that can be performed in any order. In **170** the desired transmission characteristics are obtained. Knowing the material extinction coefficient for the filter material to be used, the corresponding thickness profile is calculated, using for example Lambert-Beer's law (1). A mould is manufactured which can be a solid structure representing the negative of the calculated thickness profile. Or it can contain a cavity representing the calculated thickness profile. This can be done by a process based on for example 3D printing, extrusion, sintering or lamination or by any suitable subtractive or additive method that can provide an arbitrary shaped structure. An optionally step is to mix additives into the filtering material. The solution is then left to rest in a vacuum chamber to withdraw air bubbles introduced by the mixing. Air bubbles could cause scattering of the light and reduce the contrast. Especially air bubbles on the boundary of the filter material could result in locally incorrect thickness followed by an incorrect transmission level. The additives could be one that influence absorption, refraction, conductivity, colour, mechanical strength or any other desired property.

In **190,** glass plates are put together and kept separated with a non-resilient spacer material with controlled thickness. This could for example be small rods of steel, ceramics or hard polymer or any other firm and non-reactive material. The glass plates are then fixed together with means for clamping.

In **200,** the first filter material is inserted between the glass plates. The filter material will be placed and around the mould if the mould is the negative of the thickness profile, or it will be placed inside the mould if the mould is a hollow structure representing the thickness profile. The bulk of the material is made to solidify and the stack is left to rest to let air escape. The boundaries of the filter material are preferably not allowed to be completely solidified, i.e., the surface of the solidifying filter material may still be a little "wet" when it is separated from the mould. This effect may be obtained by the presence of softeners in the mould, which inhibit the complete curing of the filter resin at the contact interface. Preferably, a filter material with low adherence to glass is used. It is then possible in **210** to remove one of the glass plates and the mould without damaging any of them. The thickness of the filter material will then remain correct and provide the targeted transmission level. In **220** the second material is inserted and made to solidify and rest to let air escape. The glass plates may be used for moulding purposes only - their very smooth surface makes glass plates particularly suitable for this purpose - or one or both of them may be kept in place as part of the final product.

The following text will describe an example of one of the embodiments of the invention.

The desired brightness profile of two projectors of a multichannel projection display system was determined and the target was a filter with linear transmission profile. A mould was manufactured with a Polyjet OBJET Connex 3D printer, which prints 1600 dots per inch layers in the z-direction. The mould material was Tango Black Plus which has a rubber-like and dense structure. A dense structure is important so that the mould material creates a smooth interface with the filter material and so that the filter material does not penetrate the mould.

For filter material, TSE3032(A) rubber silicone, as sold by Momentive (from Columbus, Ohio, USA), was used. To increase the absorption of the filtering part, a tint was mixed with the rubber silicone. The tint was a carbon black paste from Sioen chemicals and the ratio between the tint and the rubber silicone resin was 10%/90%. The carbon black paste was thoroughly mixed with the rubber silicone resin. The solution was put inside a vacuum chamber to extract air that was introduced from the mixing process.

For the outer walls, glass plates with antireflection coatings were used. They were placed in a parallel arrangement and on top of each other with steel rods in between as spacers, and fixed together with clamps.

The tinted resin solution was introduced between the glass plates using a syringe and then left some time to rest for letting air escape. The glass plates with the filter material were then put in 50-60 °C for 3-4 hours to cure. It proved to be important that the bulk was solidified but that the outer boundaries of the material remained partly uncured.

One glass plate and the mould were removed without damaging the mould or the resin, and the second material (the non-tinted resin) was put in the cavity that had been formed by the mould. A (new) glass plate was placed again parallel and on top of the first glass plate and fixed with clamps. The glass unit with resins was again cured in 50-60 °C for 3-4 hours.

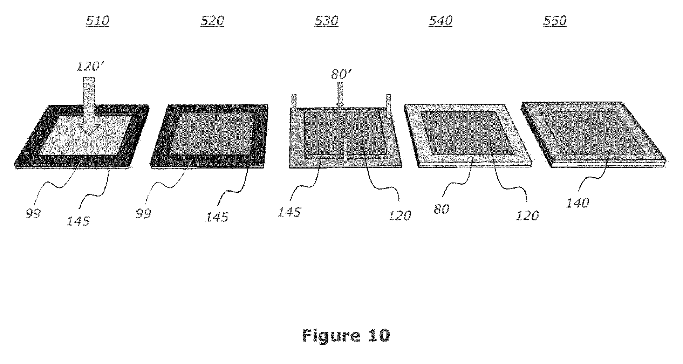

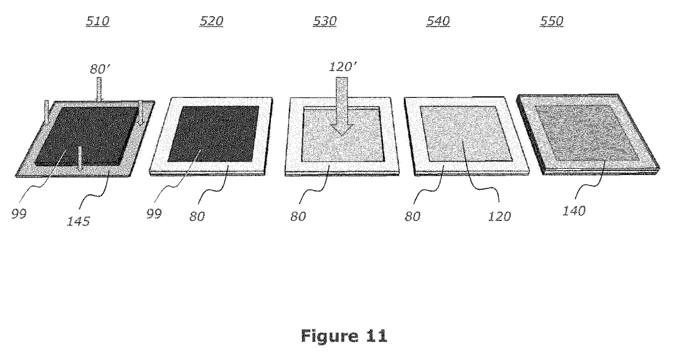

Figures 10 and 11 illustrate steps of two respective embodiments of the method according to the present invention. Without loss of generality, a square filter with a square zone of first material is illustrated. Due to the scale of the drawings, the non-linear interface has not been represented in faithful detail. The variations in shading are only intended to aid in discerning the individual represented parts, and are not intended to be indicative of the actual colour or degree of transparency of said parts. Where moulding cavities are shown, the skilled person will understand that further moulding elements may have to be added during the moulding steps to form an adequately delimited enclosure. In all embodiments of the method according to the present invention, the first material and the second material are different materials having substantially the same (real) refractive index, as described above. In the description of these steps, terms such as "top" and "bottom" refer to the orientation of elements as illustrated, without limiting the scope of the invention in any way to methods in which this particular orientation is respected. Details of the materials, their preparation, the selection and production of the moulds, etc., are not repeated here, but may applied as described in connection with other embodiments.

With reference to Figure 10, an embodiment of the method for making an optical filter according to the present invention comprises the following steps. In this embodiment, a central part of the filter is moulded prior to a peripheral part.

In a first step **510,** a first transmitting sheet **145** and a moulding element **99** are combined to form a first moulding cavity **120'.** This moulding cavity **120'** is delimited on one side (in the illustrated case, the bottom of the cavity) by a part of a face of the first transmitting sheet **145** (in the illustrated case, the top of said sheet), and along an edge, in particular its peripheral edge, by a surface of the moulding element **99.** This edge has a non-linear character, as described in more detail above.

In a second step **520,** a first material **120** is inserted in the first moulding cavity **120'** in liquid state. At least the bulk of the first material **120** is then allowed to solidify. During this step, a sheet may optionally be applied to close off the top of the first moulding cavity **120'** and ensure a flat top surface - the second transmitting sheet **140** of the finished product (which is put in its final place in step **550** as described below) may optionally be used for this purpose.

In a third step **530,** the moulding element **99** (and the optional top sheet, as the case may be) is removed or dissolved so as to produce a second moulding cavity **80'** in the space previously occupied by the moulding element **99.** This second moulding cavity **80'** is indicated by vertical arrows pointing downwards. It shall be noted that, as this second moulding cavity **80'** consists of the empty space around the already moulded volume of first material **120,** further (peripheral) moulding elements may be employed to adequately enclose this second cavity **80'** to allow the moulding to take place.

In a fourth step **540,** a second material **80** is inserted in the second moulding cavity **80'** in liquid state.

In a fifth step **550,** a second transmitting sheet **140** is placed on top of the first material **120** and the second material **80,** parallel to the first transmitting sheet **145.**

It shall be noted that step **540** and step **550** may be exchanged, in the sense that the second transmitting sheet **140** may be placed on top of the already moulded first material **120** as an additional delimiting element for the second moulding cavity **80',** in which case the entire material stack is complete upon completion of step **540.**

With reference to Figure 11, another embodiment of the method for making an optical filter according to the present invention comprises the following steps. In this embodiment, a peripheral part of the filter is moulded prior to a central part.

In a first step **510,** a first transmitting sheet **145** and a moulding element **99** are combined to form a first moulding cavity **80'.** This moulding cavity **80'** is delimited on one side (in the illustrated case, the bottom of the cavity) by a part of a face of the first transmitting sheet **145** (in the illustrated case, the top of said sheet), and along an edge (here, the "inner" edge of the central opening) by a surface of the moulding element **99.** This edge has a non-linear character, as described in more detail above. This first moulding cavity **80'** is indicated by vertical arrows pointing downwards. It shall be noted that, as this first moulding cavity **80'** consists of the empty space around the moulding element **99,** further moulding elements may be employed to adequately enclose this first cavity **80'** to allow the moulding to take place.

In a second step **520,** a first material **80** is inserted in the first moulding cavity **80'** in liquid state. At least the bulk of the first material **80'** is then allowed to solidify.

In a third step **530,** the moulding element **99** is removed so as to produce a second moulding cavity **120'** in the space previously occupied by the moulding element **99.**

In a fourth step **540,** a second material **120** is inserted in the second moulding cavity **120'** in liquid state.

In a fifth step **550,** a second transmitting sheet **140** is placed on top of the first material **80** and the second material **120,** parallel to the first transmitting sheet **145.**

While the invention has been described hereinabove with reference to specific embodiments, this is done to illustrate and not to limit the invention, the scope of which is to be determined on the basis of the enclosed claims. Where certain features have only been described in the context of a filter embodiment or a method embodiment, these features can be used *mutatis mutandis* in embodiments of the other category to achieve the same technical effects and advantages.

**Claims**

**1.** An optical filter having a substantially planar main body, the optical filter comprising a first filter material (80) and a second filter material (120) present in respective regions of said main body, the first filter material (80) and the second filter material (120) having substantially the same real part of their refractive index, wherein the first filter material (80) and the second filter material (120) are in mutual contact along an interface surface, and wherein a cross-section of said interface surface along a plane perpendicular to said main body comprises a curved line.

2. The optical filter according to claim 1, wherein the difference between the real part of the refractive index of said first filter material (80) and the real part of the refractive index of said second filter material (120) is less than 0.002.

3. The optical filter according to any of the preceding claims, wherein said curved line is described by $y = a \ln(bx)$, where $x$ and $y$ are coordinates in said plane, the $x$-axis being parallel to said main body and the $y$-axis being perpendicular to said main body, and a and b are scaling constants.

4. The optical filter according to any of the preceding claims, wherein the material thicknesses are chosen to provide a pre-defined filter transmission.

5. The optical filter according to any of the preceding claims, wherein at least one of said first filter material (80) and said second filter material (120) is perceived homogeneous for the intended radiation.

6. The optical filter according to any of the preceding claims, wherein means for increasing the absorption coefficient have been added to at least one of said first filter material (80) and said second filter material (120).

7. The optical filter according to claim 6, wherein said means for increasing the absorption is carbon black.

8. The optical filter according to any of the preceding claims, wherein at least one of said first filter material (80) and said second filter material (120) comprises a resin.

9. The optical filter according to any of the preceding claims, further comprising a first transmitting sheet (145) covering a first side of said main body.

10. The optical filter according to any of the preceding claims, further comprising a second transmitting sheet (140) covering a second side of said main body.

11. The optical filter according to any of claims 9-10, wherein the first transmitting sheet and/or the second transmitting sheet are glass plates or transparent polymers.

12. A method for preparing an optical filter, the method comprising:

- combining (510) a first planar surface (145) and a moulding element (99) to form a first moulding cavity (120'; 80'), said first moulding cavity (120'; 80') being delimited on one side by a first part of said first planar surface (145) and along an edge by a moulding surface of the moulding element (99),
- inserting (520) a first material (120; 80) in said first moulding cavity (120'; 80') in liquid state,
- allowing the bulk of said first material (120; 80) to solidify,
- removing (530) the moulding element (99) so as to produce a second moulding cavity (80'; 120') in the space previously occupied by the moulding element (99), said second moulding cavity (80'; 120') being delimited on one side by a second part of said first planar surface (145) and along an edge by said solidified first material (120; 80), and
- inserting (540) a second material (80; 120) in the second moulding cavity (80'; 120') in liquid state;

wherein the first material and the second material have substantially the same real part of their refractive index; and wherein a cross-section of said moulding surface along a plane perpendicular to said first planar surface comprises a curved line.

13. The method according to the preceding claim, wherein the outer boundaries of said first material are left partly non-solidified during the removing (530) of the moulding element (99).

14. The method according to any of claims 12-13, wherein the first planar surface (145) is a first transmitting sheet, which becomes part of the optical filter.

15. The method according to any of claims 12-14, further comprising placing (550) a second transmitting sheet (140) on top of the first material (120; 80) and the second material (80; 120), parallel to the first planar surface (145), said second transmitting sheet becoming part of the optical filter.

**Figure 1**

**Figure 2**

50

L (%)

20

60

10

**Figure 3**

Figure 4

**Figure 5**

a)

b)

20

A    B

85

80

10

20

A

85

80

120

10

**Figure 6**

120

80

**Figure 7**

a)

140

150

80

120

150

145

80

b)

80

130

110

Figure 8

Obtain the wished transmission characteristics, the material extinction coefficient and calculate the corresponding thickness profile. Manufacture a mold being a structure- or containing a cavity representing the calculated thickness profile. — 170

Optionally mix additives into the filtering material and let the solution rest in a vacuum chamber to withdraw air bubbles. — 180

Preparation — 160

Put transmitting sheets parallel and on top of each other with spacers in between, fix their position by e.g. clamps. — 190

Pour filter material 1 between the glass plates and let the bulk solidify but let the outer boundaries be left non-solidified. — 200

Remove one glass plate and the mold. — 210

Insert filter material 2 and seal the stack with another glass plate. — 220

Let material 2 solidify — 230

**Figure 9**

510   520   530   540   550

120'

80'

99   145   99   145   145   120   80   120   140

Figure 10

Figure 11

Europäisches
Patentamt

European
Patent Office

Office européen
des brevets

# EUROPEAN SEARCH REPORT

Application Number

EP 13 19 2199

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | US 6 078 442 A (TADA EIJIROH [JP] ET AL) 20 June 2000 (2000-06-20) * column 6 - column 7; figures 10,12-14,17 * | 1 | INV. G02B5/00 G02B5/20 G02B5/22 G03B11/00 G03B21/13 H04N9/31 |
| X | WO 2013/161767 A1 (ASAHI GLASS CO LTD [JP]) 31 October 2013 (2013-10-31) * abstract; figures 3, 4(a)-(c),5,7(a)-(e) * | 1-15 | |
| A | JP 2010 156765 A (JSR CORP) 15 July 2010 (2010-07-15) * abstract; figures 1-6,9 * | 1,6,7,12 | |
| A | US 2007/047118 A1 (WAKABAYASHI TAKAYUKI [JP] ET AL) 1 March 2007 (2007-03-01) * paragraphs [0015] - [0019], [0029] - paragraph [0052]; figures 1A-C,7A-C * | 1 | |
| A | JP 2000 241876 A (HITACHI LTD) 8 September 2000 (2000-09-08) * abstract; figures 1,2,7,8 * | 1 | TECHNICAL FIELDS SEARCHED (IPC) G02B G03B H04N |

The present search report has been drawn up for all claims

| Place of search | Date of completion of the search | Examiner |
|---|---|---|
| Munich | 28 April 2014 | Feeney, Orla |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 13 19 2199

This annex lists the patent family members relating to the patent documents cited in the above-mentioned European search report.
The members are as contained in the European Patent Office EDP file on
The European Patent Office is in no way liable for these particulars which are merely given for the purpose of information.

28-04-2014

| Patent document cited in search report | | Publication date | Patent family member(s) | | Publication date |
|---|---|---|---|---|---|
| US 6078442 | A | 20-06-2000 | DE | 19828681 A1 | 07-01-1999 |
| | | | GB | 2326733 A | 30-12-1998 |
| | | | US | 6078442 A | 20-06-2000 |
| WO 2013161767 | A1 | 31-10-2013 | NONE | | |
| JP 2010156765 | A | 15-07-2010 | NONE | | |
| US 2007047118 | A1 | 01-03-2007 | JP | 4900678 B2 | 21-03-2012 |
| | | | JP | 2007094385 A | 12-04-2007 |
| | | | US | 2007047118 A1 | 01-03-2007 |
| JP 2000241876 | A | 08-09-2000 | JP | 3965818 B2 | 29-08-2007 |
| | | | JP | 2000241876 A | 08-09-2000 |

EPO FORM P0459

For more details about this annex : see Official Journal of the European Patent Office, No. 12/82

**EP 2 871 500 A1**

**Patent documents cited in the description**

- US 6078442 A